(19) Europäisches Patentamt
European Patent Office
Office européen des brevets

(11) Veröffentlichungsnummer: **0 180 760**
**A1**

(12) # EUROPÄISCHE PATENTANMELDUNG

(21) Anmeldenummer: 85112333.1

(51) Int. Cl.4: **A 01 N 55/04**

(22) Anmeldetag: 28.09.85

(30) Priorität: 11.10.84 DE 3437243

(43) Veröffentlichungstag der Anmeldung: 14.05.86 Patentblatt 86/20

(84) Benannte Vertragsstaaten: DE FR GB

(71) Anmelder: HOECHST AKTIENGESELLSCHAFT
Postfach 80 03 20
D-6230 Frankfurt am Main 80(DE)

(72) Erfinder: Schreiber, Bernhard, Dr.
Thüringer Weg 10
D-6238 Hofheim am Taunus(DE)

(54) **Mittel zur Bekämpfung von Mikroorganismen der Abteilung Myxomycota.**

(57) Das an sich von der Bekämpfung von unerwünschten Pilzen der Abteilung Eumycota bekannte fungizide Mittel mit einem Gehalt an Triphenylzinnacetat (common name: Fentin-acetat) wird erfolgreich zur Bekämpfung von unerwünschten Mikroorganismen aus der Abteilung Myxomycota, bevorzugt der Gattung Polymyxa aus der Klasse Plasmodiophoromycetes eingesetzt. Dadurch gelingt es insbesondere, den als Überträger des Gelbmosaikvirus vermuteten Polymyxa graminis im Boden von Getreidekulturen wie Gerste zu bekämpfen.

EP 0 180 760 A1

Croydon Printing Company Ltd.

Mittel zur Bekämpfung von Mikroorganismen der Abteilung Myxomycota

Die Erfindung betrifft den Einsatz eines Mittels auf der Basis von Fentin-acetat bei der Bekämpfung von Mikroorganismen aus der Abteilung Myxomycota.

Triphenylzinnacetat (= Fentin-acetat, common name) der Formel

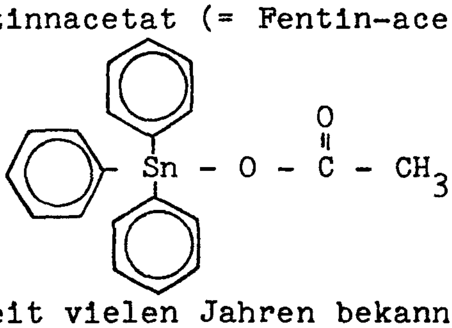

ist ein seit vielen Jahren bekanntes Fungizid, das alleine (siehe beispielsweise GB-A 797 073 oder H. Martin und C.R. Worthing, Pesticide Manual, British Crop Protection Council, 5. Auflage - 1977, S. 271) oder auch im Gemisch mit Mangan-[1,2-ethan-bis(dithiocarbamat)] (= Maneb, common name; siehe beispielsweise GB-A 1 002 181) eingesetzt wird. Bisher wurden Fentin-acetat enthaltende fungizide Mittel ausschließlich zur Bekämpfung von unerwünschten Pilzen aus der Abteilung Eumycota eingesetzt, insbesondere gegen Pilze aus den Unterabteilungen Deuteromycotina und Mastigomycotina (z.B. aus der Klasse Oomycetes). Als Kulturen, in denen das Mittel angewendet werden kann, werden Kartoffel, Rübe, Sellerie, Bohne, Möhre, Karotte, Zwiebel, Hopfen, Erdnuß, Kakao, Kaffee und Reis genannt. Bei der Bezeichnung der Pilze wird dem von Ainsworth vorgelegten System gefolgt (siehe beispielsweise in Hoffmann et al., Lehrbuch der Phytomedizin, 1976, Abschnitt 6 - "Pilze").

In den letzten Jahren wird insbesondere bei Gerste ein Befall mit dem Gelbmosaikvirus (BaYDV= Barley yellow dwarf virus) beobachtet, der zunächst an strichelförmigen Symptomen an den jüngsten Blättern und später am völligen Vergilben der Blätter erkannt werden kann. Als ein möglicher Überträger des Virus wird Polymyxa graminis, ein Mikroorganismus der Gattung Polymyxa (Klasse Plasmodiophoromycetes, Abteilung

Myxomycota) angenommen, der nicht mehr zu den Pilzen im engeren Sinne (Abteilung Eumycota) gehört, sondern als Schleimpilz eine Zwischenstellung zwischen Bakterien und den Pilzen im engeren Sinne einnimmt.

Aufgabe der vorliegenden Erfindung ist es, ein Mittel aufzufinden, mit dessen Hilfe es gelingt, unerwünschte Mikroorganismen aus der Abteilung Myxomycota, insbesondere der Klasse Plasmodiophoromycetes, bevorzugt der Gattungen Polymyxa oder Plasmodiophora zu bekämpfen und damit beispielsweise zu einer Reduktion oder zu einer vollständigen Beseitigung des Gelbmosaikvirus zu kommen. Lösung dieser Aufgabe ist dann ein Mittel mit einem Gehalt an Triphenylzinnacetat der vorstehenden Formel für die Bekämpfung von unerwünschten Mikroorganismen der Abteilung Myxomycota beziehungsweise die Verwendung von Triphenylzinnacetat für dieses spezielle Anwendungsgebiet.

Neben Mitteln, die als Wirkstoff ausschließlich Triphenylzinnacetat neben üblichen Formulierungshilfsmitteln enthalten, können auch solche eingesetzt werden, die mindestens einen weiteren als Fungizid bekannten Wirkstoff (z.B. das eingangs erwähnte Maneb) enthalten.

Da es sich bei der Bekämpfung der genannten Mikroorganismen im wesentlichen um solche handelt, die sich im Erdboden aufhalten, wird ein Verfahren zur Bekämpfung dieser Mikroorganismen so durchgeführt, daß das Mittel bereits vor der Aussaat auf die Anbaufläche von Nutzpflanzenkulturen aufgebracht und in den Boden eingearbeitet wird.

Das erfindungsgemäße Verfahren eignet sich insbesondere zur Bekämpfung von Polymyxa graminis in Getreide wie Weizen, Gerste sowie zur Bekämpfung von Polymyxa betae in Zuckerrüben und zur Bekämpfung von Plasmodiophora brassicae in Cruciferen-Kulturen wie Blumenkohl oder Raps.

Gegenstand der vorliegenden Erfindung ist auch ein Verfahren zur Bekämpfung von Mikroorganismen der Abteilung Myxomycota in Nutzpflanzenkulturen, bei dem das erfindungsgemäße Mittel vor der Aussaat bzw. vor dem Pflanzen der Kulturen auf die Anbauflächen appliziert wird.

Die erfindungsgemäßen Mittel können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Spritzpulver sind in Wasser gleichmäßig dispergierbare Präparate, die neben dem (den) Wirkstoff(en) außer gegebenenfalls einem Verdünnungs- oder Inertstoff noch Netzmittel wie polyoxethylierte Fettalkohole, Alkyl- oder Alkylphenylsulfonate und/oder Dispergierhilfsmittel wie ligninsulfonsaures Natrium, 2,2'-dinaphthylmethan-6,6'-disulfonsaures Natrium, dibutylnapthalinsulfonsaures Natrium oder auch oleoylmethyltaurinsaures Natrium enthalten. Die Herstellung erfolgt in üblicher Weise, z.B. durch Mahlen und Vermischen der Komponenten.

Emulgierbare Konzentrate können z.B. durch Auflösen des (der) Wirkstoffe(s) in einem inerten organischen Lösemittel wie Butanol, Cyclohexanon, Dimethylformamid, Xylol oder auch höhersiedenden Aromaten oder aliphatischen oder cycloaliphatischen Kohlenwasserstoffen unter Zusatz von einem oder mehreren Emulgatoren hergestellt werden. Bei flüssigen Wirkstoffen kann der Lösemittelanteil auch ganz oder teilweise entfallen. Als Emulgatoren können beispielsweise verwendet werden: Alkyl-arylsulfonsaure Calciumsalze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Kondensationsprodukte, Alkylpolyglykolether, Sorbitanfettsäureester, Polyoxethylensorbitanfettsäureester oder Polyoxethylensorbitester.

Stäubemittel kann man durch Vermahlen des Wirkstoffes mit feinverteilten, festen Stoffen, z.B. Talkum, natürlichen Tonen wie Kaolin, Bentonit, Pyrophillit oder Diatomeenerde erhalten. Granulate können entweder durch Verdüsen des Wirkstoffes auf adsorptionsfähiges, granuliertes Inertmaterial hergestellt werden oder durch Aufbringen von Wirkstoffkonzentrationen mittels Bindemitteln, z.B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 10 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden. Daneben enthalten die genannten Wirkstofformulierungen gegebenenfalls die jeweils üblichen Haft-, Netz-, Dispergier-, Emulgier-, Penetrations-, Lösemittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Auch Mischungen oder Mischformulierungen mit anderen nichtfungiziden Wirkstoffen wie Insektiziden, Akariziden, Herbiziden, Düngemitteln oder Wachstumsregulatoren sind gegebenenfalls möglich, wobei teilweise auch synergistische Wirkungssteigerungen erzielt werden können.

Die Anwendungskonzentrationen der erfindungsgemäßen Mittel in der fertigen Spritzbrühe betragen im allgemeinen zwischen 0,3 und 30 g Wirkstoff pro Liter Spritzbrühe (entsprechend 0,1 bis 10 kg Wirkstoff/ha). In den nachfolgenden Beispielen verhalten sich Gew.-Teile (GT) zu Vol.-Teilen (VT) wie kg zu $dm^3$ (l) und %-Angaben beziehen sich - falls nichts anders angegeben ist - auf das Gewicht.

Formulierungsbeispiele

Beispiel 1

Ein Stäubemittel wird erhalten, indem man a) 10 GT Wirkstoff(e) mit 90 GT Talkum oder einem anderen Inertstoff mischt und in einer Schlagmühle zerkleinert, oder indem man b) 60 GT Wirkstoff(e), 35 GT Talkum und 5 GT Haftmittel (z.B. ein Polysaccharid wie (R)Rhodopol der Rhone-Poulenc S.A.) in der gleichen Weise homogenisiert.

Beispiel 2

Ein in Wasser leicht dispergierbares, benetzbares Pulver wird erhalten, indem man 25 GT Wirkstoff(e), 64 GT kaolinhaltigen Quarz als Inertstoff, 10 GT ligninsulfonsaures Kalium und 1 GT oleoylmethyltaurinsaures Natrium als Netz- und Dispergierhilfsmittel mischt und in einer Stiftmühle mahlt.
Eine Formulierung mit 5 % Wirkstoffgehalt kann wie folgt zusammengesetzt sein: 5 % Wirkstoff(e), 6 % eines sulfonierten Napthalinformaldehydkondensats (z.B. (R)Dispersogen A der HOECHST AG), 2 % eines Na-Salzes einer Alkylnapthalinsulfonsäure (z.B. (R)Leonil DB der HOECHST AG), 5 % eines Gemisches aus Polypropylenglykol und $SiO_2$ (z.B. (R)Acrotin 341 der HOECHST AG), 25 % eines $SiO_2$ (z.B. (R)Sipernat der Degussa AG) und 57 % Kaolin Typ 1777.

Beispiel 3

Ein in Wasser leicht dispergierbares Dispersionskonzentrat wird erhalten indem man 20 GT Wirkstoff(e) mit 6 GT eines Alkylphenolpolyglykolethers (z.B. (R)Triton X 207 von Rohm and Haas Co.), 3 GT Isotridecanolpolyglykolether (8 EO-Einheiten) und 71 GT paraffinischem Mineralöl (Siedebereich ca. 255 bis über 377°C) mischt und in einer Reibkugelmühle auf eine Feinheit von unter 5 µm vermahlt.

Beispiel 4

Ein emulgierbares Konzentrat wird erhalten aus 15 GT Wirkstoff(e), 75 GT Cyclohexanon als Lösemittel und 10 GT oxethyliertem Nonylphenol (10 EO-Einheiten) als Emulgator.

Biologische Beispiele

Beispiel 1

Gleiche Flächeneinheiten wurden im September vor der Aussaat mit Wintergerste der Sorte Igri mit 2,16 kg Wirkstoff pro ha in Form eines Spritzpulvers mit einem Gehalt von 54 % an Fentin-acetat behandelt bzw. nicht behandelt. Dabei stieg bei der behandelten Flächeneinheit der Anteil der Ähren tragenden Halme pro $m^2$ um 4,1 % gegenüber der unbehandelten Flächeneinheit und der Körnerertrag pro ha um 5,8 %. Außerdem konnte eine Vergilbung der Blätter durch das Gelbmosaikvirus bis zum März des nachfolgenden Jahres verhindert werden.

Beispiel 2

Gleiche Flächeneinheiten wurden vor der Aussaat mit Wintergerste der Sorte Gerbel gemäß den Angaben des Beispiels 1 behandelt. Dabei stieg der Körnerertrag um 10,8 %.

Beispiel 3

Gleiche Flächeneinheiten wurden vor der Aussaat mit Wintergerste der Sorte Gerbel (als Probe aus einem anderen Vorrat als in Beispiel 2 entnommen) mit a) 2,16 kg Wirkstoff pro ha in Form eine Spritzpulvers mit einem Gehalt von 54 % an Fentin-acetat, b) 2,88 kg Wirkstoff pro ha in Form eines Spritzpulvers mit einem Gehalt von 54 % an Fentin-acetat und 18 % an Maneb behandelt bzw. nicht behandelt. Dabei stieg der Körnerertrag um 4 % bei a) und um 11 % bei b). In allen Beispielen war der zu bekämpfende Polymyxa graminis bereits im Boden vorhanden.

Beispiel 4

Gleiche Flächeneinheiten wurden vor der Aussaat mit Zuckerrüben mit einem Gemisch aus 1,08 kg/ha Fentinacetat und 0,36 kg/ha Maneb in Form eines Spritzpulvers behandelt bzw. nicht behandelt. Bei der behandelten Flächeneinheit wurde der Anteil der an Rizomania erkrankten Rüben von 45 % gegenüber der Kontrolle um 26 % gesenkt.

Beispiel 5

Vor dem Einpflanzen von jungen Blumenkohlstecklingen in Töpfen (4 Pflanzen pro Topf) im Gewächshaus wurde bei einem Teil der Töpfe die Erde mit einem Gemisch von 0,54 kg/ha Fentinacetat und 0,16 kg/ha Maneb in Form eines Spritzpulvers behandelt. Der andere Teil der Versuchstöpfe blieb als Kontrolle unbehandelt.

Ca. 8 Wochen nach der Applikation wurde eine Bonitur vorgenommen. Es zeigte sich, daß die durch den Gelbmosaikvirus hervorgerufenen Wucherungen am Hypokotyl der Blumenkohlpflanzen gegenüber den Kontrollpflanzen, die zu ca. 50 % erkrankt waren, gänzlich unterbunden wurde.

Patentansprüche

1. Mittel mit einem Gehalt an Triphenylzinnacetat der Formel

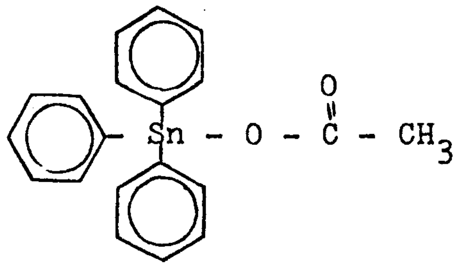

für die Bekämpfung von Mikroorganismen der Abteilung Myxomycota.

2. Mittel nach Anspruch 1 für die Bekämpfung von Mikroorganismen der Klasse Plasmodiophoromycetes.

3. Mittel nach Anspruch 1 für die Bekämpfung von Mikroorganismen der Gattung Polymyxa oder Plasmodiophora.

4. Verwendung von Triphenylzinnacetat bei der Bekämpfung von Mikroorganismen der Abteilung Myxomycota.

5. Verfahren zur Bekämpfung von Mikroorganismen der Abteilung Myxomycota in Nutzpflanzenkulturen bei dem das Mittel nach Anspruch 1 vor der Aussaat auf die Anbaufläche appliziert wird.

0180760

Europäisches Patentamt

# EUROPÄISCHER RECHERCHENBERICHT

Nummer der Anmeldung

EP 85 11 2333

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
| --- | --- | --- | --- |
| | | | A 01 N 55/04 |
| X | US-A-3 499 086 (H. BRUECKNER et al.)<br>* Ansprüche 4,5,8,17 *<br>--- | 1-5 | |
| A | US-A-3 395 228 (A.D. DACUS)<br>* Spalte 2, Zeilen 9-45 *<br>----- | | |
| | | | RECHERCHIERTE SACHGEBIETE (Int. Cl.4) |
| | | | A 01 N |

Der vorliegende Recherchenbericht wurde für alle Patentansprüche erstellt.

| Recherchenort | Abschlußdatum der Recherche | Prüfer |
| --- | --- | --- |
| DEN HAAG | 30-01-1986 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82